# EUROPEAN PATENT APPLICATION

(11) **EP 1 698 537 A1**
(43) Date of publication of application: **06.09.2006**
(21) Application number: 05425124.4
(22) Date of filing: 04.03.2005
(51) Int. Cl.: B62D 1/06

(54) **Steering wheel with a high-quality material covering**

(71) Applicant: CAVALLI S.r.l., 21040 Cislago (IT)
(72) Inventor: Cavalli, Luigi, 21047 Saronno (IT)
(74) Representative: Cerbaro, Elena

(57) **Abstract**

A method of producing steering wheels with a high-quality material covering, in particular wooden steering wheels, includes preparing, from a multilayer composite material having an outer layer (11) of high-quality material, in particular briar, a flat strip (17) elongated along a straight axis (A); the strip (17) is curved along the axis (A) to form a curved collar-like member (18), which is then pressed in a mold (25) to form a closed-ring shell (10) with a C-shaped cross section; and the shell (10) is then applied to a radially outer peripheral edge (12) of the steering wheel.

## Description

The present invention relates to a method of producing steering wheels with a high-quality material covering, in particular wooden steering wheels, and to a steering wheel produced using such a method.

A type of wooden steering wheel is known, in which the wood (typically briar) covering is located on a radially outer peripheral edge, and extends about the whole periphery, of the steering wheel. Steering wheels of this type are produced in the same way as those with coverings of different geometry. More specifically, at least for top-of-the-range steering wheels, the covering is made of a multilayer composite material having an outer layer of briar; a sheet of the material is cut into curved sectors, which are then superimposed to form a flat ring; the ring is then hot-pressed perpendicular to the ring plane to form a shell-like annular half-member; and, for each steering wheel, two annular half-members are produced in this way and then glued facing each other on opposite sides of a supporting structure of the steering wheel having a layer of polymer foam material, typically polyurethane.

Methods normally involving the manufacture of two half-members subsequently applied to the supporting structure - precisely because they call for producing and assembling two separate component parts - are fairly complex and expensive and, in particular, involve considerable waste. Neither are such methods altogether satisfactory in terms of appearance, mainly on account of the join line between the two half-members being visible on the finished steering wheel.

It is an object of the present invention to provide a method of producing steering wheels with a high-quality material covering, in particular wooden steering wheels, designed to eliminate the aforementioned drawbacks of known methods. More specifically, it is an object of the invention to provide a method which is relatively straightforward and cheap to implement, and provides for producing steering wheels of fully satisfactory appearance.

According to the present invention, there is provided a method of producing steering wheels with a high-quality material covering, in particular wooden steering wheels, as claimed in Claim 1.

As compared with known methods, the method according to the invention provides for greatly simplifying the manufacturing process, and enables a considerable reduction in waste and overall manufacturing cost.

In particular, the method according to the invention provides for producing steering wheels of innovative, fully satisfactory appearance, in which, in particular, no joins are visible between the various parts of the covering. The invention therefore also relates to a steering wheel with a high-quality material covering, in particular of wood, as claimed in Claim 14.

A number of non-limiting embodiments of the invention will be described by way of example with reference to the accompanying drawings, in which:
Figure 1 shows, schematically, a steering wheel with a high-quality material covering, in particular of wood, in accordance with the present invention;
Figure 2 shows a schematic section of a detail of the Figure 1 steering wheel;
Figures 3, 4 and 5 show respective steps in the manufacture of the covering of the Figure 1 steering wheel;
Figures 6, 7 and 8 show a mold at various stages in the manufacture of the covering;
Figure 9 shows a section of the covering extracted from the mold;
Figure 10 shows a larger-scale detail of the Figure 6 mold;
Figure 11 shows the covering being applied to the steering wheel;
Figure 12 shows a section of a variation of the Figure 9 covering;
Figure 13 shows a partial schematic section of a variation of the Figure 2 steering wheel.

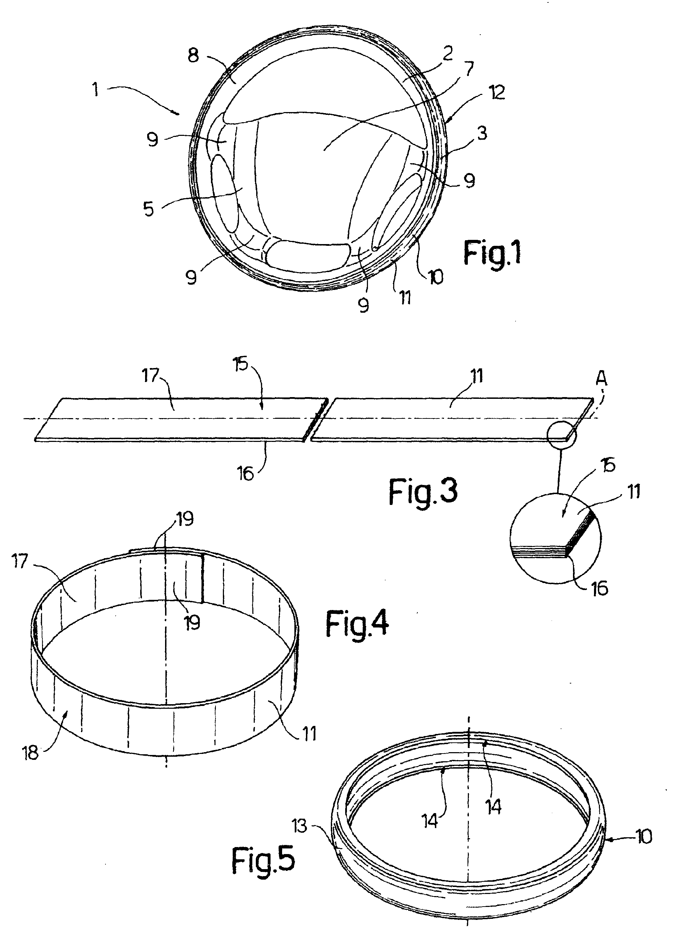

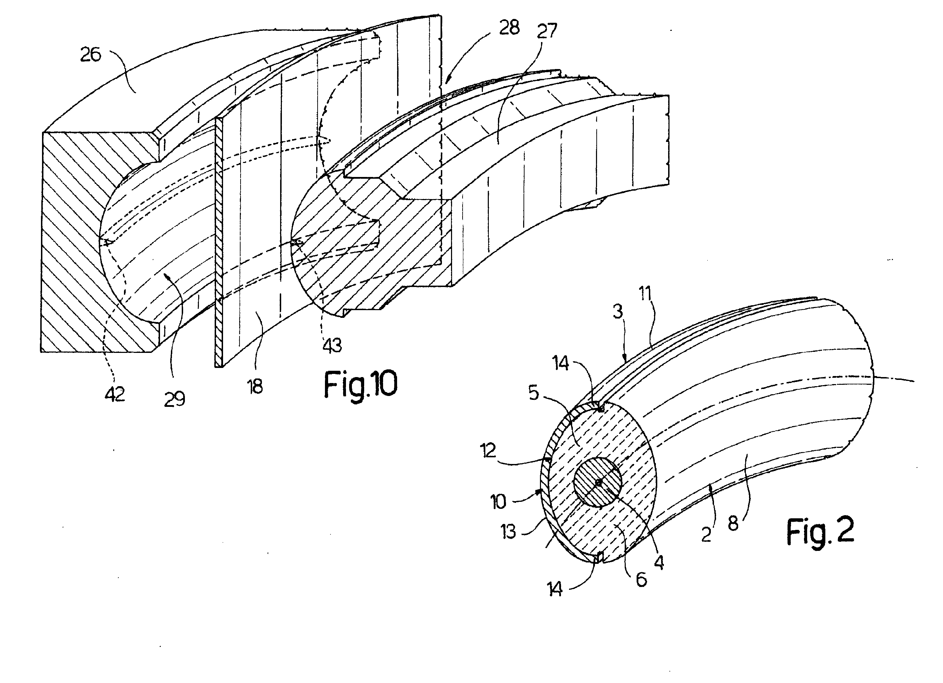

With reference to Figures 1 and 2, an automotive steering wheel 1, in particular for a car, comprises a supporting structure 2; and a covering 3 of high-quality material, in particular wood (e.g. briar). Supporting structure 2 comprises a supporting core 4 (e.g. made of metal), and a foam layer 5 of polymer foam material 6, e.g. low-expansion polyurethane, and is defined by a central core 7 for connection to a steering column, by a peripheral wheel 8, and by a number of spokes 9. Covering 3 is defined by a shell 10 made of known multilayer composite sandwich material comprising, in particular, a succession of wooden layers alternating with substrates impregnated with polymerizable and/or cross-linkable resin, and an outer layer 11 of briar or other wood or high-quality material veneer visible on steering wheel 1.

Shell 10 is a substantially circular, closed-ring shell made of one continuous piece with no joins, is located along a radially outer peripheral edge 12 of steering wheel 1, is fitted about wheel 8 of supporting structure 2, along the whole of peripheral edge 12, and is bounded by a lateral wall 13 having a C-shaped cross section extending at least 180° about wheel 8, and having two opposite, facing, ring-shaped peripheral edges 14 substantially parallel to each other.

With reference to Figures 3 to 5, steering wheel 1 is made from a pack 15 of multilayer composite material comprising a base layer 16 of raw, rough-surfaced wood, one or more resin-impregnated substrates alternating with sheets of wood, and outer layer 11. Pack 15 is cut into a substantially flat strip 17 (Figure 3) elongated along a substantially straight axis A; and strip 17 is then curved along axis A to form a curved collar-like member 18 with a predetermined radius of curvature (Figure 4). More specifically, strip 17 is wound and closed into a ring to form a tubular collar, by overlapping and securing (e.g. stapling) longitudinally opposite end portions 19 of strip 17.

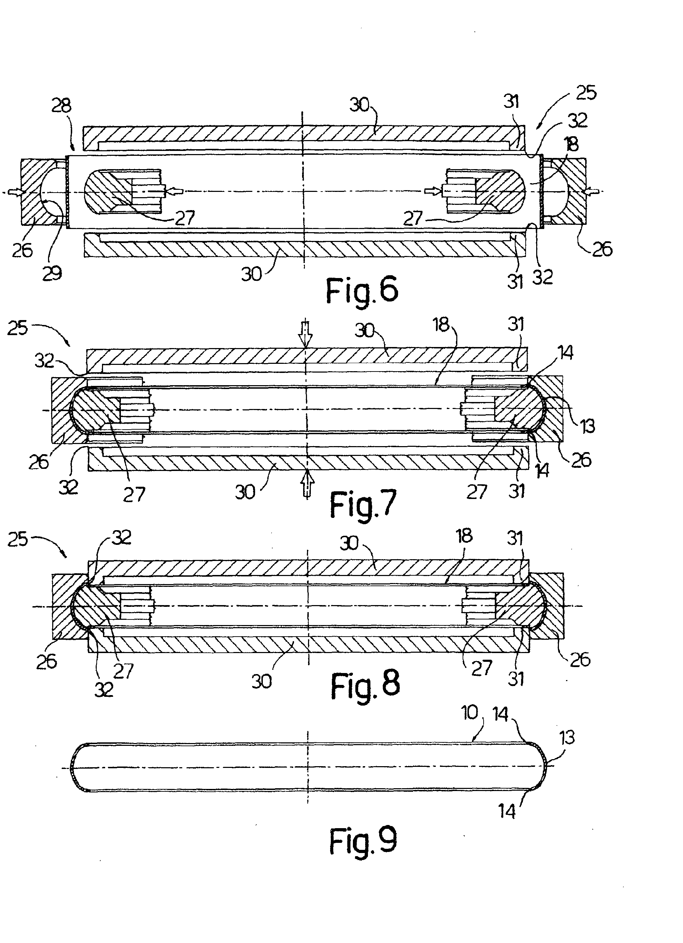

This is followed by a process of forming shell 10 from member 18, wherein member 18 is pressed to curve it about axis A, to impart a radial concavity to member 18, and so form a closed-ring shell 10 (Figure 5) with a C-shaped cross section. The process of forming shell 10 from member 18 is shown in detail in Figures 6 to 10.

A mold 25 is used comprising an annular matrix 26 and an annular punch 27, which are substantially circular and concentric and face each other to define an annular chamber 28 for insertion of member 18; matrix 26 is located radially outwards and has a forming seat 29; and punch 27 is located radially inwards, and cooperates with matrix 26 to impart the shape of seat 29 to member 18. Matrix 26 and punch 27 comprise respective numbers of circumferentially side by side sectors, are movable radially as a whole with respect to each other, and cooperate to press member 18.

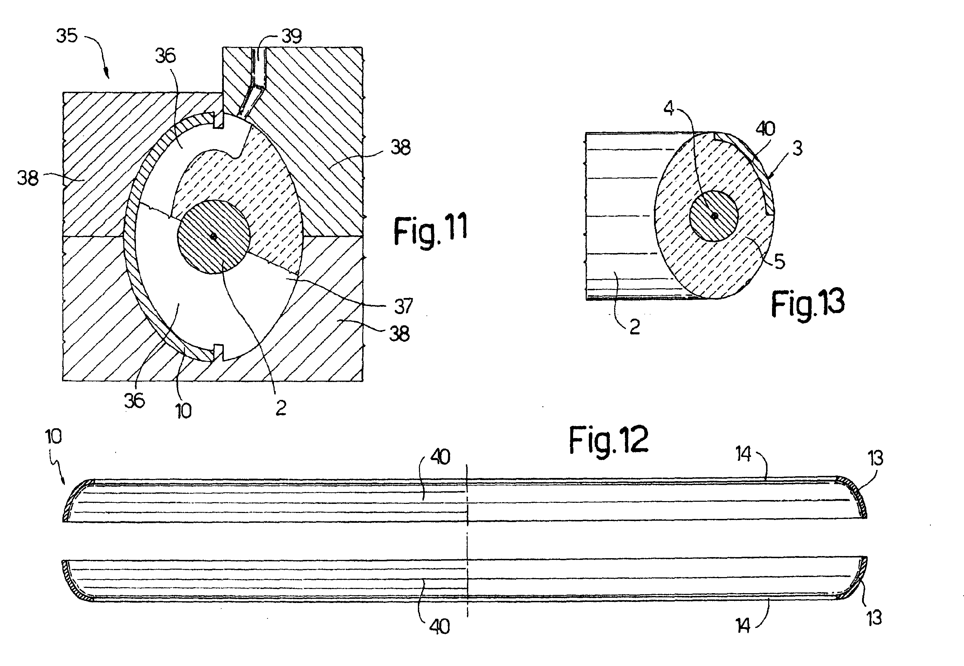

Once member 18 is placed inside chamber 28 (Figures 6 and 10) between matrix 26 and punch 27, the process of forming shell 10 comprises a pressing step preferably conducted in two substantially perpendicular pressing directions.

Member 18 is first pressed radially between matrix 26 and punch 27 in a first pressing direction (shown schematically by the arrows in Figure 6) radial with respect to member 18. Member 18, which is housed inside chamber 28 in a position substantially perpendicular to the first pressing direction, is curved to form wall 13 of shell 10 with a radially inner concavity and with two peripheral edges 14 (Figure 7).

Peripheral edges 14 are then pressed in a second pressing direction substantially perpendicular to the first pressing direction (as shown schematically by the arrows in Figure 7). For this purpose, mold 25 comprises two clamp plates 30 located on opposite sides of member 18, movable towards each other, and having respective annular projections 31 which cooperate with punch 27 to press peripheral edges 14 onto punch 27 (Figure 8).

The pressing step is accompanied by a trimming step, in which, in addition to being curved towards each other, peripheral edges 14 are also trimmed. The trimming step is performed in the same mold 25; for which purpose, projections 31 have respective trimming edges 32, which cooperate with matrix 26 and punch 27 to trim peripheral edges 14 and detach the trimming scrap from shell 10 (Figure 8).

Mold 25 also comprises a known heating system (not shown), so that the pressing step is performed in the presence of heat to polymerize and/or cross-link the resin in the multilayer composite material from which shell 10 is made. After a given time long enough to complete polymerization/cross-linking and formation of shell 10, mold 25 is opened to extract shell 10 (Figure 9).

After being subjected, if necessary, to routine surface finishing operations, shell 10, made in one single piece with no joins, is applied whole to supporting structure 2, in particular along peripheral edge 12, as shown schematically in Figure 11.

Supporting structure 2 and shell 10 are inserted inside an injection mold 35 comprising, between supporting structure 2 and shell 10, clearances 36 enabling shell 10 to be fitted to peripheral edge 12 and about wheel 8.

For which purpose, as shown in the bottom centre part of Figure 11, injection mold 35 may be loaded with a supporting structure 2 defined solely by core 4, with no layer 5 (unfoamed supporting structure); in which case, clearances 36 are defined by the space (as yet empty) eventually filled with the polymer foam material 6 forming layer 5. Clearances 36 are defined, in particular, by an inner cavity 37 of injection mold 35 bounded by mutually cooperating members 38 of injection mold 35 movable with respect to one another.

Alternatively, as shown in the top centre part of Figure 11, a supporting structure 2 may be used comprising core 4, and an incomplete layer 5 in which clearances 36 for fitting shell 10 to wheel 8 are formed (partly foamed supporting structure). In both cases, shell 10 is placed about wheel 8 inside injection mold 35. Supporting structure 2 and shell 10 are centred with respect to each other and held in position by appropriate stops (not shown).

Polymer foam material 6 (e.g. polyurethane foam) is then injected into injection mold 35 by one or more nozzles 39 communicating with clearances 36, and fills clearances 36 to form layer 5 and at the same time secure shell 10 integrally to supporting structure 2, both by mechanical interference and by polymer material 6 adhering to the inner surface of shell 10 (i.e. to rough-wood base layer 16). In the case of a partly foamed supporting structure 2, instead of polymer material 6, another adhesive and/or expanding polymer material may be injected, providing it is capable of filling clearances 36 and connecting shell 10 integrally to supporting structure 2.

In one variation, as opposed to being applied whole to supporting structure 2, shell 10 is cut into two mating annular half-shells 40 (Figure 12). The cutting step is advantageously performed in mold 25, simultaneously with the pressing step. For which purpose, as shown by the dash lines in Figure 10, matrix 26 and punch 27 have respective members 42, 43 which cooperate to cut shell 10 into two half-shells 40. For example, matrix 26 has an annular edge 42 projecting centrally from seat 29, and punch 27 has a corresponding annular cavity 43. When mold 25 is closed, the relative movement of matrix 26 and punch 27, in addition to shaping member 18, also cuts the two half-shells 40. If shell 10 is cut into two half-shells 40, these may be fitted to supporting structure 2, on opposite sides of wheel 8, without interfering with layer 5, and may therefore be simply glued to each other and to layer 5 in known manner. Supporting structure 2 may obviously also be fitted with only one half-shell 40, as shown in Figure 13.

## Claims

1. A method of producing steering wheels with a high-quality material covering, in particular wooden steering wheels, comprising the steps of:
- preparing, from a multilayer composite material having an outer layer (11) of high-quality material, in particular briar, a substantially flat strip (17) elongated along a substantially straight axis (A);
- curving the strip (17) along said axis (A) to form a curved collar-like member (18) having a predetermined radius of curvature;
- pressing the member (18) in a mold (25) to curve the member about said axis (A) and impart a radial concavity to the member to form a curved shell (10) having a C-shaped cross section.

2. A method as claimed in Claim 1, **characterized in that** the strip (17) is formed into a closed ring to form a tubular collar (18).

3. A method as claimed in Claim 2, **characterized in that** the shell (10) is a closed-ring shell with a C-shaped cross section.

4. A method as claimed in Claim 3, **characterized by** comprising a cutting step to cut the shell (10) into two mating annular half-shells.

5. A method as claimed in Claim 4, **characterized in that** the cutting step is performed in the mold (25) simultaneously with the pressing step.

6. A method as claimed in one of the foregoing Claims, **characterized in that**, at the pressing step, the member (18) is pressed radially between a matrix (26) and a punch (27) in a pressing direction radial with respect to the member (18).

7. A method as claimed in one of the foregoing Claims, **characterized in that** the pressing step is performed in two substantially perpendicular pressing directions.

8. A method as claimed in one of the foregoing Claims, **characterized in that**, at the pressing step, the member (18) is curved to form a shell (10) having a C-shaped lateral wall (13) with an angular extent of at least 180°.

9. A method as claimed in one of the foregoing Claims, **characterized in that** the pressing step is accompanied by a trimming step to trim two opposite peripheral edges (14) of the shell (10).

10. A method as claimed in one of the foregoing Claims, **characterized by** comprising a step of applying the shell (10) to a supporting structure (2) of the steering wheel (1); the shell (10) being located along a radially outer peripheral edge (12) of the steering wheel.

11. A method as claimed in Claim 9, **characterized in that** the shell (10) is made in one piece with no joins, and is applied whole to the supporting structure (2) of the steering wheel (1).

12. A method as claimed in one of the foregoing Claims, **characterized in that** the step of applying the shell (10) to the supporting structure (2) comprises the steps of: placing the supporting structure (2) and the shell (10) in an injection mold (35), clearances (36) being provided between the shell and the supporting structure to enable the shell (10) to be fitted about the supporting structure (2); and injecting a polymer foam, adhesive and/or expanding material (6) into the injection mold (35) to fill the clearances (36) and secure the shell (10) integrally to the supporting structure (2).

13. A method as claimed in Claim 12, **characterized in that** the supporting structure (2) inserted inside the injection mold (35) is an unfoamed supporting structure.

14. A steering wheel (1) with a high-quality material covering, in particular of wood, comprising a supporting structure (2) having a peripheral wheel (8) and at least partly covered with a polymer foam material (6); and a curved shell (10) made of multilayer composite material having an outer layer (11) of high-quality material, in particular briar, and applied to at least one portion of the wheel; the steering wheel being **characterized in that** the shell (10) is a substantially circular, closed-ring shell made in one piece with no joins; the shell (10) being bounded by a lateral wall (13) having a C-shaped cross section extending at least 180° about the wheel (8).

15. A steering wheel as claimed in Claim 14, **characterized in that** the shell (10) is located along a radially outer peripheral edge (12) of the steering wheel.
